# FASCICULE DE BREVET EUROPEEN

(11) **EP 1 302 889 B1**
(45) Date de publication et mention de la délivrance du brevet: **09.02.2005**
(21) Numéro de dépôt: 01203859.2
(22) Date de dépôt: 11.10.2001
(51) Int. Cl.: G06K 7/00, G06K 19/07

(54) **Transpondeur et procédé de gestion associé atténuants du bruit émis**
Transponder und entsprechendes Steuerungsverfahren zur Verringerung der ausgesendeten Störsignale
Transponder and corresponding operating method reducing emitted noise

(43) Date de publication de la demande: 16.04.2003
(73) Titulaire: EM Microelectronic-Marin SA, 2074 Marin (CH)
(72) Inventeur: Sacksteder, Frédéric, 2068 Hauterive (CH); Adatte, Martine, 2000 Neuchâtel (CH)
(74) Mandataire: Laurent, Jean

(56) Documents cités:
- EP-A- 0 681 192
- EP-A- 1 056 040
- US-A- 5 600 683
- US-A- 5 955 950

## Description

La présente invention concerne un procédé de gestion d'une pluralité de transpondeurs susceptibles d'être placés dans le champ électromagnétique émis par un émetteur-récepteur lors des communications avec ce dernier. La présente invention concerne également la structure de transpondeur utilisée.

Des systèmes comprenant un émetteur-récepteur et une pluralité de transpondeurs, ainsi que les protocoles de communication ou d'anti-collision associés sont assez répandus dans l'art antérieur.

Dans ce type d'application, les protocoles de communication ou d'anti-collision de l'art antérieur sont basés sur le principe d'une période d'émission de l'émetteur-récepteur durant laquelle une commande est envoyée à l'un ou à plusieurs des transpondeurs suivie d'une période de réception de l'émetteur-récepteur durant laquelle le ou les transpondeurs concernés par la commande précédente envoient une réponse.

Suivant le protocole de communication utilisé on peut dissocier deux types de période de réception de l'émetteur-récepteur, premièrement, les périodes de réception dite sélective qui font suite à des commandes envoyées à l'attention d'un nombre déterminé de transpondeurs, et deuxièmement, les périodes de réception dite générale qui font suite à des commandes envoyées à l'attention d'un nombre indéterminé de transpondeurs.

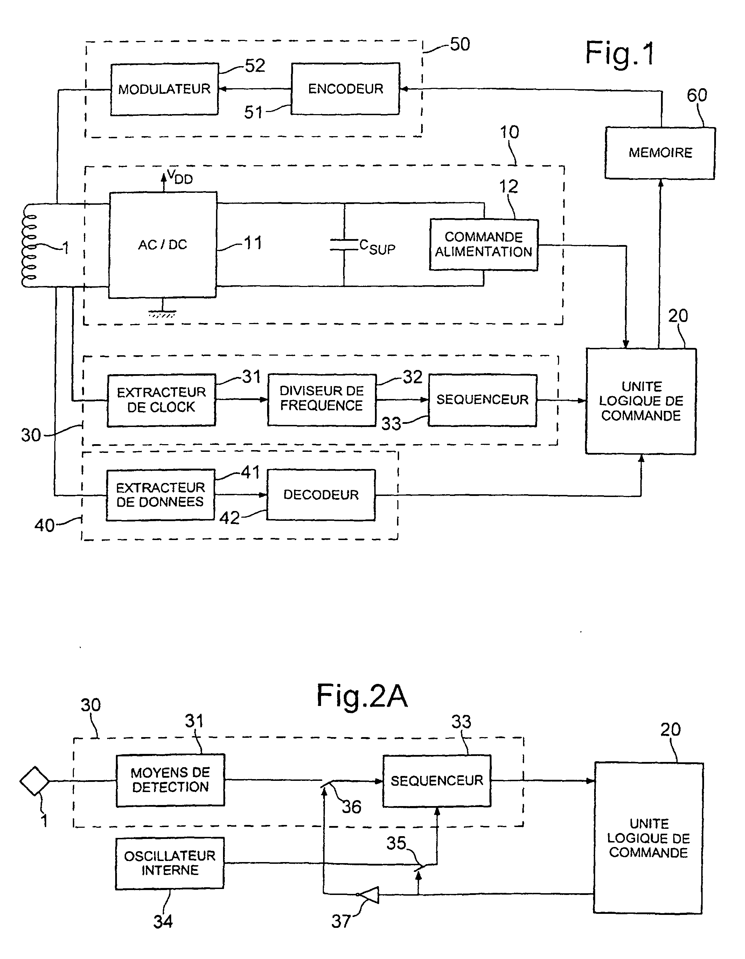

Une structure classique d'un transpondeur est représentée à la figure 1. Le transpondeur comprend une antenne 1 permettant de recevoir les signaux émis par l'émetteur-récepteur, et permettant de renvoyer des signaux à l'émetteur-récepteur, non représenté. L'antenne 1 permet d'alimenter un bloc d'alimentation 10 du transpondeur constitué par un convertisseur ACIDC 11, une capacité de charge Csup du bloc d'alimentation et des moyens de commande de l'alimentation 12 du transpondeur. Ce bloc d'alimentation 10 alimente notamment une unité logique de commande 20 qui traite les informations reçues et détermine l'état du transpondeur.

L'antenne 1, qui reçoit les signaux émis par l'émetteur-récepteur, est reliée à un bloc de synchronisation 30 du transpondeur sur l'émetteur-récepteur, comprenant des moyens d'extraction de signaux d'horloge 31, suivis de moyens diviseurs de fréquence 32, suivi d'un séquenceur 33. Les moyens d'extraction de signaux d'horloge 31 permettent de récupérer un signal d'horloge à la fréquence porteuse utilisée par l'émetteur-récepteur. Les moyens diviseurs de fréquence 32 permettent d'abaisser à la fréquence de travail du transpondeur, la fréquence du signal d'horloge extrait. Cette même antenne 1 est également reliée à un bloc de réception 40 permettant de recevoir 41 et de décoder 42 les commandes envoyées par l'émetteur-récepteur.

L'antenne 1, qui émet également les signaux de réponse à l'émetteur-récepteur, est reliée à un bloc de modulation 50 constitué par un encodeur 51 suivi d'un modulateur 52.

Le transpondeur comprend également des moyens de mémorisation 60 destiné à contenir des informations propres, telles que son numéro d'identification et des informations externes reçues de l'émetteur-récepteur.

L'unité logique de commande 20 du transpondeur est connectée à tous les autres blocs afin de pouvoir commander chacun d'entre eux et gérer les informations stockées en mémoire 60 suivant les commandes reçues.

Le système, sus-présenté selon l'art antérieur, comprenant un émetteur-récepteur et une pluralité de transpondeurs présente quelques inconvénients, en particulier, lorsque le nombre de transpondeurs augmente. Un tel système est viable, lorsque le nombre des transpondeurs utilisés n'excède guère une dizaine, voir quelques dizaines de transpondeurs.

Or dans le cadre d'applications liées notamment à la grande distribution et avec la nécessité croissante de marquer les produits afin de pouvoir les identifier ultérieurement de manière aisée, le besoin d'utiliser un système permettant d'identifier une centaine, voir plusieurs centaines de transpondeurs présents dans le champ d'un lecteur, est devenu pressant.

Il est connu par ailleurs dans l'art antérieur, le document EP 0 681 192 concernant des transpondeurs, interrogateurs, systèmes et procédés pour éliminer les exiaences de synchronisation des interrogateurs, le document EP 1 056 040 concernant une étiquette d'identification avec convertisseur d'impédance et le document US 5,600,683 concernant un format de données pour systèmes de télécommunication.

La présente invention se propose de fournir une structure de transpondeur et un procédé de gestion permettant d'optimiser les communications dans un système comprenant un émetteur-récepteur et une pluralité de transpondeurs susceptibles d'être dans le champ de communication de ce dernier, le nombre de transpondeurs pouvant être de plusieurs centaines.

Il a été mis en évidence dans le cadre de la présente invention que le facteur limitatif du nombre de transpondeurs pouvant être présents dans le champ électromagnétique de l'émetteur-récepteur était lié au bruit émis par les transpondeurs eux-mêmes. Tant que le nombre des transpondeurs reste faible, le bruit émis par l'ensemble des transpondeurs reste suffisamment bas pour l'émetteur-récepteur. En revanche, dès que le nombre des transpondeurs augmente, le bruit émis par l'ensemble des transpondeurs devient d'un ordre de grandeur égal à celui du signal de réponse voire plus important que ce signal de réponse émis par le ou les transpondeurs en communication avec l'émetteur-récepteur.

L'idée qui consisterait à placer des moyens de filtrage du bruit au niveau de l'émetteur-récepteur ne résout pas le problème posé dans le cadre de cette application, car l'émetteur-récepteur ne peut différencier la nature des signaux de bruit des signaux de réponse reçus.

Il a été également mis en évidence dans le cadre de la présente invention que les problèmes liés au bruit émis par les transpondeurs ne sont réels que lors des périodes de réception de l'émetteur-récepteur.

Toujours, dans le cadre de la présente invention, il a été mis en évidence qu'un des principaux générateurs de bruit dans les transpondeurs utilisés était les moyens de synchronisation avec l'émetteur-récepteur. Ces moyens de synchronisation comprennent des moyens d'extraction de signaux d'horloge délivrés par l'émetteur-récepteur à une fréquence porteuse donnée et des moyens diviseurs de fréquence placés en sortie des moyens d'extraction de signaux d'horloge.

C'est pourquoi, afin de pallier les inconvénients de l'art antérieur, le procédé de gestion selon la présente invention, permet de gérer une pluralité de transpondeurs placés dans un champ électromagnétique émis par un émetteur-récepteur, chacun des transpondeurs comprenant au moins une antenne et des moyens de synchronisation avec l'émetteur-récepteur. Le procédé de gestion est caractérisé en ce qu'au moins durant une partie des périodes de réception générale de l'émetteur-récepteur, des moyens d'atténuation du bruit des transpondeurs comprenant un oscillateur sont activés et en ce que les moyens de synchronisation sont désactivés au moins partiellement lors de l'activation de l'oscillateur.

Selon un mode de réalisation de l'invention, les moyens d'atténuation du bruit d'un transpondeur comprennent un oscillateur interne délivrant un signal d'horloge à une fréquence de travail du transpondeur, les moyens diviseurs de fréquence étant désactivés pendant l'activation de l'oscillateur.

L'utilisation d'un oscillateur interne comme moyens d'atténuation du bruit peut entraîner des problèmes de synchronisation des transpondeurs sélectionnés avec l'émetteur-récepteur pour certaines commandes de l'émetteur-récepteur nécessitant une réponse plus longue de la part des transpondeurs.

Selon une variante préférée de l'invention, il est prévu d'activer les moyens de synchronisation sensiblement périodiquement durant les périodes de réception de l'émetteur-récepteur.

D'autres caractéristiques et avantages de la présente invention apparaîtront dans la description suivante, donnée à titre d'exemple non limitatif faite en référence aux dessins annexés, dans lesquels :
La Figure 1, déjà décrite, est une représentation d'une structure classique d'un transpondeur ;
La Figure 2A est une représentation selon un premier mode de réalisation de l'invention des moyens d'atténuation du bruit et des moyens de synchronisation d'un transpondeur ;
La Figure 2B est une représentation selon un deuxième mode de réalisation de l'invention des moyens d'atténuation du bruit et des moyens de synchronisation d'un transpondeur ;
La Figure 3 est un exemple de diagramme d'activation des moyens d'atténuation du bruit des transpondeurs lors d'un protocole de communication ou d'anti-collision ;
La Figure 4 est une représentation d'un troisième mode de réalisation selon l'invention des moyens d'atténuation du bruit des transpondeurs.
La Figure 5 représente les périodes de recharge lors de l'utilisation des moyens d'atténuation selon la figure 4.
La Figure 6 est une représentation d'un quatrième mode de réalisation selon l'invention des moyens d'atténuation du bruit des transpondeurs.
Les Figures 7A, 7B et 7C représentent la mise en oeuvre des moyens de synchronisation entre l'émetteur-récepteur et les transpondeurs.

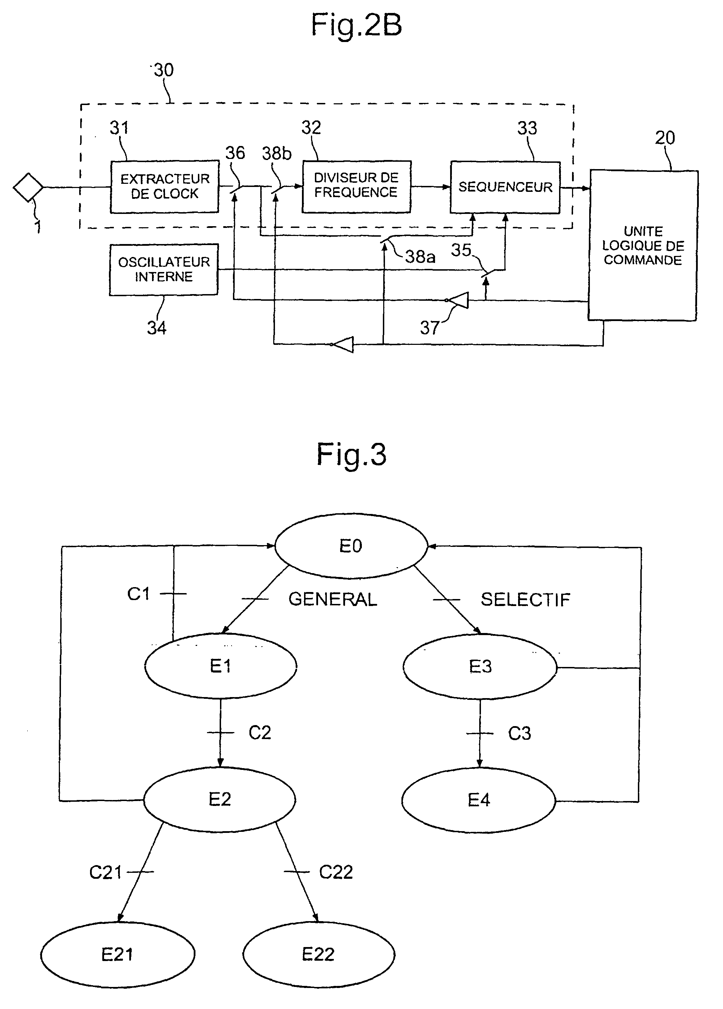

Les transpondeurs présentés aux figures 2A et 2B comprennent des blocs de modulation et de démodulation, non représentés, déjà décrits dans le cadre de la présentation de l'art antérieur à la figure 1. La structure de transpondeur présentée à la figure 1 ne comprend qu'une seule antenne, il est néanmoins envisageable d'avoir deux antennes, l'une assurant la réception des signaux émis par l'émetteur-récepteur et l'autre assurant l'émission des signaux de réponse.

La Figure 2A représente les moyens d'atténuation du bruit et les moyens de synchronisation 30 d'un transpondeur selon un premier mode de réalisation de l'invention. Les moyens d'atténuation du bruit suivant ce mode sont notamment constitués par un oscillateur interne 34. Cet oscillateur interne 34 est activé ou désactivé par des moyens de commutation 35 commandés par l'unité logique de commande 20. Des moyens de commutation 36 sont également prévus pour pouvoir activer ou désactiver les moyens de détection 31. Un inverseur 37 est prévu de préférence entre les moyens de commutation 35 et 36 afin que le transpondeur ne puisse utiliser deux bases de temps simultanément.

Dans ce mode de réalisation particulier, le transpondeur n'est pas pourvu de moyens diviseurs de fréquence, les moyens de synchronisation 30 comprennent notamment des moyens de détection 31 et un séquenceur 33 pouvant être incorporé dans l'unité de commande logique 20. Les moyens de détection 31 peuvent être constitués par des moyens d'extraction de signaux d'horloge permettant de reconnaître le type de commande et de synchroniser le transpondeur avec l'émetteur-récepteur. Selon une variante de ce premier mode de réalisation, les moyens de détection 31 sont constitués par des moyens de détection d'enveloppe.

Lorsque le transpondeur envoie une information à l'émetteur-récepteur, une base de temps lui est nécessaire. Cette base de temps est fournie par l'oscillateur interne 34 qui délivre des signaux d'horloge à une fréquence propre égale à une fréquence de travail du transpondeur.

La figure 2B représente les moyens d'atténuation du bruit d'un transpondeur selon un deuxième mode de réalisation de l'invention. Ces moyens d'atténuation du bruit comprennent notamment un oscillateur interne 34 et des moyens de commutation 38a et 38b dans un mode silence. Cet oscillateur interne 34 est activé par les moyens de commutation 35 commandés par l'unité logique de commande 20. Les moyens de synchronisation 30 comprennent notamment des moyens d'extraction de signaux d'horloge 31 et des moyens diviseurs de fréquence 32, le séquenceur 33 pouvant être incorporé dans l'unité logique de commande 20.

Des moyens de commutation 36 sont également prévus pour pouvoir activer les moyens d'extraction de signaux d'horloge 31. Les moyens de commutation 38b permettent d'activer les moyens d'extraction de signaux d'horloge 31 en même temps que les moyens diviseurs de fréquence 32 et les moyens de commutation 38a permettent d'activer le mode silence du transpondeur, durant lequel les moyens diviseurs de fréquence sont désactivés.

Suivant une application particulière de l'invention, la fréquence des signaux d'horloge extraits par les moyens extracteurs 31, appelée fréquence porteuse, est de 125 KHz. Les moyens diviseurs de fréquence 32 permettent d'abaisser cette fréquence porteuse à une fréquence de travail des transpondeurs, par exemple environ 2 KHz.

L'oscillateur 34 possède également une fréquence propre à laquelle il délivre des signaux d'horloge. Cette fréquence peut être de 8 KHz, les moyens diviseurs de fréquence 32 sont alors désactivés partiellement ce qui occasionne moins de bruit. Selon une variante préférée de ce deuxième mode de réalisation (figure 2B), l'oscillateur 34 possède une fréquence propre égale à la fréquence de travail du transpondeur, soit 2 KHz. Ainsi, les moyens diviseurs de fréquence 32 sont désactivés quand l'oscillateur interne 34 est activé.

Comme il a été souligné dans la partie introductive, l'objectif de l'invention est de réaliser un système comprenant un émetteur-récepteur capable d'identifier un grand nombre de transpondeurs présents dans son champ d'émission-réception ou de communiquer avec un ou plusieurs de ces transpondeurs. C'est pourquoi, l'invention concerne non seulement un transpondeur en tant que tel, mais également un procédé de gestion d'une pluralité de transpondeurs placés dans le champ d'un émetteur-récepteur. Ce procédé de gestion concerne l'activation des moyens d'atténuation du bruit des transpondeurs suivant le type de période, émission, réception générale, réception sélective.

La Figure 3 correspond à un exemple du procédé de gestion de l'activation des moyens d'atténuation du bruit des transpondeurs lors d'un protocole de communication ou d'anti-collision. Ce procédé de gestion peut être décomposé en cinq états principaux.

Un état initial E0, appelé période neutre pendant laquelle l'émetteur-récepteur n'émet aucune commande et ne reçoit aucune réponse.

Un premier état E1, appelé période d'émission générale pendant laquelle l'émetteur-récepteur envoie un signal de commande général s'adressant à tous les transpondeurs présents dans son champ d'émission soit un nombre indéterminé de transpondeurs.

Un deuxième état E2, appelé période de réception générale pendant laquelle au moins un transpondeur fournit une réponse à l'émetteur-récepteur. Cet état E2 fait suite à l'état E1.

Un troisième état E3, appelé période d'émission sélective pendant laquelle l'émetteur-récepteur envoie un signal de commande sélectif s'adressant à un ou plusieurs transpondeurs déterminés.

Et un quatrième état E4, appelé période de réception sélective pendant laquelle les transpondeurs sélectionnés envoient une réponse à l'émetteur-récepteur. Cet état E4 fait suite à l'état E3.

Selon le premier mode de réalisation de la figure 2A, les moyens d'atténuation du bruit des transpondeurs comprennent un oscillateur interne 34 associé à des moyens de commutation 36 pour activer ou désactiver les moyens de détection 31, par exemple des moyens d'extraction de signaux d'horloge 31.

Initialement, le procédé de gestion est dans l'état E0 et de préférence l'oscillateur interne 34 de chaque transpondeur est désactivé, les moyens de détection 31 étant activés afin de pouvoir détecter un signal de commande de l'émetteur-récepteur.

Le procédé de gestion passe dans l'état E1 lorsque l'émetteur-récepteur émet un signal de commande général s'adressant à tous les transpondeurs présents dans son champ.

Dans l'hypothèse où tous les transpondeurs sont bloqués ou bien qu'aucun transpondeur n'est présent dans le champ de l'émetteur-récepteur, la condition C1 est alors remplie. Aucune réponse ne parvient à l'émetteur-récepteur, et la communication est alors terminée avec retour à l'état E0. Les transpondeurs peuvent être placés dans un état bloqué afin de les empêcher de répondre. Par exemple lors d'un protocole d'anti-collision, les transpondeurs identifiés sont placés dans cet état bloqué.

Dans l'hypothèse où au moins un transpondeur présent dans le champ de l'émetteur-récepteur répond, la condition C2 est alors remplie. Le procédé de gestion passe donc un deuxième état E2, appelé période de réception générale pendant laquelle au moins une réponse parvient à l'émetteur-récepteur.

Pendant cette période de réception générale E2, les moyens d'atténuation du bruit des transpondeurs placés dans le champ de l'émetteur-récepteur sont activés. Cette période de réception générale E2 est décomposée en plusieurs fenêtres de réponse décalées temporellement permettant ainsi de différencier les différentes réponses possibles.

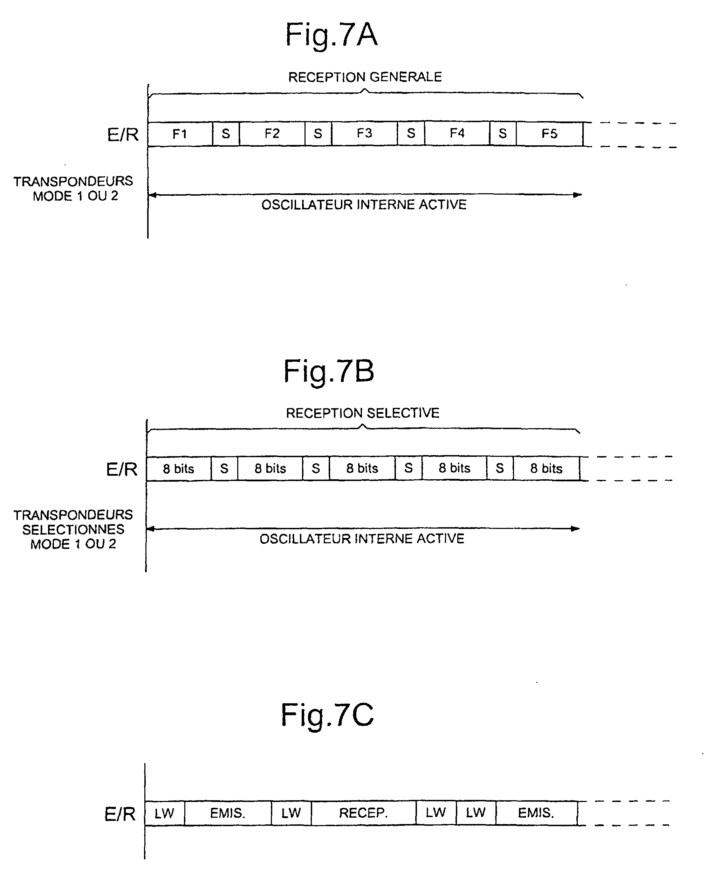

Suivant une première variante de ce premier mode de réalisation, l'oscillateur interne 34 est activé durant l'ensemble de la période de réception générale E2, les moyens de détection 31 étant désactivés. Pour garder une bonne synchronisation entre l'émetteur-récepteur et les transpondeurs, il est prévu des fenêtres de synchronisation entre les fenêtres de réponse constitutives de la période E2 (voir figure 7A). Il est important de noter que ces fenêtres de réponse sont de courte durée, ce qui évite des problèmes de désynchronisation dus à l'utilisation de l'oscillateur interne 34 des transpondeurs à l'intérieur d'une fenêtre même.

Suivant une deuxième variante de ce premier mode de réalisation, l'état E2 peut être découpé en deux sous-états. Un premier sous-état E21 correspond à la ou les fenêtres de réponse pendant lesquelles un ou plusieurs transpondeurs répondent, le second sous-état E22 correspondant à la ou les fenêtres de réponse pendant lesquelles un ou plusieurs transpondeurs ne répondent pas.

La condition C21 est remplie lorsqu'au moins un transpondeur répond dans au moins une fenêtre. Pendant l'état E21, le ou les transpondeurs répondant n'ont pas leurs moyens d'atténuation du bruit activés.

La condition C22 est remplie lorsqu'au moins un transpondeur ne répond pas dans au moins une fenêtre. Pendant l'état E22, le ou les transpondeurs ne répondant pas ont leurs moyens d'atténuation du bruit activés.

Selon cette deuxième variante, les moyens d'atténuation du bruit des transpondeurs sont donc activés uniquement pendant les fenêtres pendant lesquelles ils ne répondent pas.

Tous les transpondeurs ayant leur oscillateur interne 34 activé n'émettent que très peu de bruit et l'émetteur-récepteur peut sans difficulté savoir si au moins une réponse a été fournie dans chacune des fenêtres de réponse.

A la fin d'une période de réception générale E2, le procédé de gestion peut soit retourner dans l'état E0, soit passer dans un autre état selon le protocole de communication ou d'anti-collision utilisé.

Lorsque l'émetteur-récepteur envoie un signal de commande sélectif destiné à un ou plusieurs transpondeurs déterminés, le procédé de gestion passe dans l'état E3. L'oscillateur interne 34 de chaque transpondeur est activé à la lecture d'un codage spécifique en début du signal de commande envoyé. La condition de passage C3 est remplie lorsque les transpondeurs ont déterminé s'ils sont sélectionnés ou non par la commande reçue.

Le procédé de gestion passe alors dans l'état E4, appelé période de réception sélective. Durant cette période de réception sélective E4, les transpondeurs sélectionnés ont leurs moyens d'atténuation activés, l'oscillateur interne 34 servant de base de temps pour la réponse. Les transpondeurs non sélectionnés ont de préférence leurs moyens de détection 31 activés pour détecter l'envoi du prochain signal de commande, leur oscillateur interne 34 pouvant être alors désactivé.

Selon une variante préférée de ce premier mode de réalisation, les moyens de synchronisation 30 des transpondeurs sont activés sensiblement périodiquement pendant la période E4 afin de garder synchroniser les transpondeurs sélectionnés avec l'émetteur-récepteur. Ces moyens de synchronisation 30 sont mis en oeuvre par l'activation des moyens de détection 31 pendant des fenêtres de synchronisation envoyées par l'émetteur-récepteur (figure 7B).

Selon le deuxième mode de réalisation de la figure 2B, les moyens d'atténuation du bruit comprennent un oscillateur interne 34 associé à des moyens de commutation 36 pour activer ou désactiver les moyens d'extraction de signaux d'horloge 31 et/ou les moyens diviseurs de fréquence 32 et des moyens de commutation 38a et 38b dans un mode silence pendant lequel les moyens diviseurs de fréquence 32 sont désactivés.

Le procédé de gestion est initialement dans l'état E0. Les moyens d'extraction des signaux d'horloge 31 des transpondeurs sont activés pour détecter les signaux de commande envoyés par l'émetteur-récepteur, leurs moyens diviseurs de fréquence 32 étant désactivés, ainsi que leur oscillateur interne 34.

Toutes les conditions de passage d'un état à un autre état du procédé de gestion définies dans le cadre du premier mode de réalisation sus-décrit sont les mêmes.

Le procédé de gestion permet de gérer l'activation ou la désactivation des moyens d'atténuation du bruit et des moyens de synchronisation 30 des transpondeurs.

Durant les périodes d'émission E1 et E3, de préférence, l'oscillateur interne 34 de chaque transpondeur n'est pas activé, les moyens diviseurs de fréquence 32 étant également désactivés. Les moyens d'extraction de signaux d'horloge 31 sont activés pour reconnaître le signal de commande envoyé par l'émetteur-récepteur.

Pendant la période de réception générale E2, les moyens d'atténuation du bruit des transpondeurs placés dans le champ de l'émetteur-récepteur sont activés. Cette période de réception générale E2 est décomposée en plusieurs fenêtres de réponse décalées temporellement permettant ainsi de différencier les différentes réponses possibles.

Suivant une première variante de ce deuxième mode de réalisation, l'oscillateur interne 34 est activé durant l'ensemble de la période de réception générale E2, les moyens d'extraction de signaux d'horloge 31 sont désactivés et les moyens de diviseurs de fréquence 32 sont au moins partiellement désactivés, selon une variante non représentée. Si la fréquence propre de l'oscillateur interne 34 des transpondeurs est égale à une fréquence de travail du transpondeur, les moyens diviseurs de fréquence 32 sont alors complètement désactivés.

De la même manière que pour le premier mode de réalisation, il est prévu de préférence une synchronisation des transpondeurs (figure 7A).

Suivant une deuxième variante selon le deuxième mode de réalisation, les conditions de passage C21 et C22 pour passer respectivement dans l'état E21 ou E22 sont les mêmes que pour le premier mode de réalisation. Pendant l'état E21, le ou les transpondeurs répondant ont leur oscillateur interne désactivé, leurs moyens d'extraction de signaux d'horloge 31 et leurs moyens diviseurs de fréquence 32 étant activés. Pendant l'état E22, le ou les transpondeurs ne répondant pas ont leur oscillateur interne 34 activé, les moyens diviseurs de fréquence 32 étant au moins partiellement désactivés.

Selon cette deuxième variante, les moyens d'atténuation du bruit des transpondeurs sont donc activés uniquement pendant les fenêtres pendant lesquelles ils ne répondent pas.

Pendant la période de réception sélective E4, les moyens d'atténuation du bruit des transpondeurs non sélectionnés sont activés. De préférence, les transpondeurs sélectionnés sont placés dans le mode silence 38a, leurs moyens diviseurs de fréquence 32 et leur oscillateur interne 34 étant désactivés, les moyens d'extraction des signaux d'horloge 31 restant activés pour détecter le signal de commande suivant. Les transpondeurs sélectionnés peuvent utiliser soit leur oscillateur interne 34, soit les moyens d'extraction des signaux d'horloge 31 associés aux moyens diviseurs de fréquence 32 comme base de temps pour répondre. A la fin de la période E4, tous les transpondeurs sont remis de préférence dans le mode silence 38a. Dans l'alternative utilisant l'oscillateur interne 34 comme base de temps pour répondre, il est prévu avantageusement une synchronisation des transpondeurs sélectionnés (figure 7B).

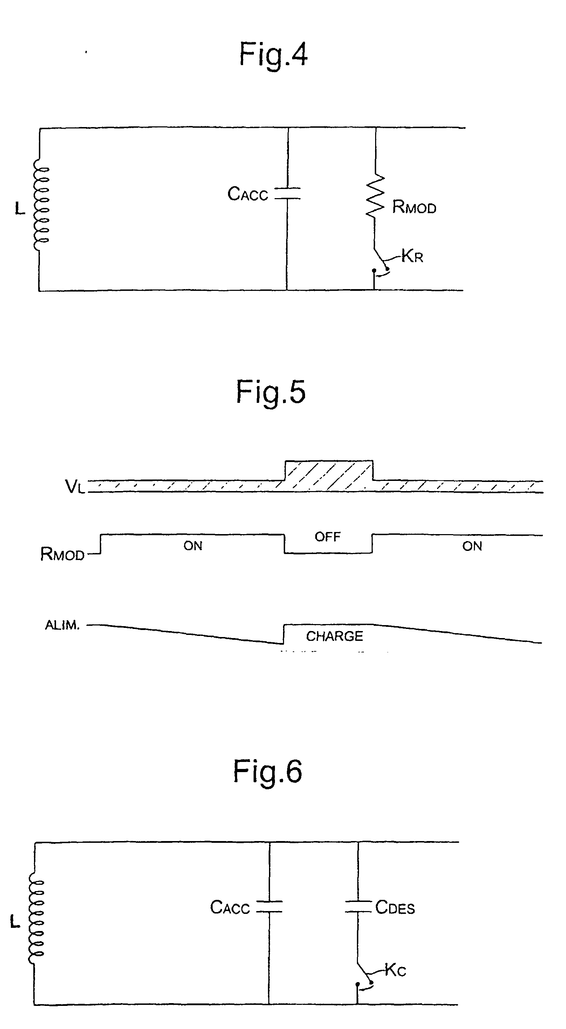

La Figure 4 est un troisième mode de réalisation selon l'invention des moyens d'atténuation du bruit des transpondeurs.

De manière classique, le modulateur utilisé dans les transpondeurs comprend une antenne L, un condensateur d'accord Cacc de l'antenne et une résistance dite de « modulation » Rmod, lors des réponses à l'émetteur-récepteur. Les réponses effectuées par le transpondeur sont généralement un signal modulé, ce signal pouvant avoir deux états, un état haut et un état bas. Afin d'obtenir ces deux états, des moyens de commutation Kr sont placés devant la résistance de modulation Rmod. Pour obtenir un signal modulé à l'état haut, les moyens de commutation Kr sont ouverts, aucun courant ne passant au travers de la résistance de modulation Rmod. Pour obtenir un signal modulé à l'état bas, les moyens de commutation sont fermés, le courant passant au travers de la résistance Rmod. Lors de la modulation à l'état bas, le facteur de qualité du transpondeur est diminué, ainsi que le bruit qu'il émet.

Il est prévu d'utiliser cette structure existante comme moyens d'atténuation du bruit. Il a été mis en évidence que la résistance de modulation Rmod doit être de faible valeur ohmique pour pouvoir atténuer efficacement le bruit émis par le transpondeur ainsi que pour obtenir un niveau bas lors de la modulation. La valeur de la résistance de modulation Rmod devra être inférieure à 15 KOhm, on prendra préférentiellement 5 KOhm.

Le transpondeur, lorsque la résistance de modulation Rmod est utilisée, émet peu de bruit, mais il reçoit également peu les signaux extérieurs et notamment l'alimentation fournie par l'émetteur-récepteur. C'est pourquoi, l'alimentation du transpondeur est rapidement insuffisante lors de l'utilisation de cette résistance de modulation Rmod.

Selon ce troisième mode de réalisation de l'invention, cette résistance de modulation Rmod associée aux moyens de commutation Kr sont utilisés comme moyens d'atténuation du bruit tout en prévoyant des périodes de recharge de l'alimentation des transpondeurs, comme montrée à la figure 5.

Les périodes d'utilisation de la résistance de modulation comme moyens d'atténuation du bruit sont définies par le procédé de gestion décrits à la figure 3. Lors de ces périodes d'utilisation, les moyens de commutation sont fermés, c'est-à-dire que l'activation de la résistance de modulation est ON. Cependant, pour alimenter les transpondeurs durant ces périodes d'utilisation, il est prévu des périodes de charge du condensateur Csup décrit à la figure 1, pendant lesquelles les moyens de commutation sont momentanément OFF, de manière à garantir une alimentation suffisante de ces transpondeurs. Les moyens de commutation Kr sont actionnés par des moyens de commande incorporé dans l'unité logique de commande 20 décrite à la figure 1.

La Figure 6 est un quatrième mode de réalisation selon l'invention des moyens d'atténuation du bruit des transpondeurs.

Une antenne L présente sur chacun des transpondeurs permet de recevoir et d'émettre des signaux. Un condensateur dit « d'accord » Cacc est placé aux bornes de l'antenne L afin de sélectionner une plage de fréquence pour la réception et l'émission des signaux par le transpondeur.

Selon ce quatrième mode de réalisation, un condensateur de désaccord Cdes est placé en parallèle au condensateur d'accord Cacc. Ce condensateur de désaccord Cdes est muni à une de ses armatures de moyens de commutation Kc. Lorsque les moyens de commutation Kc sont ouverts seul le condensateur d'accord Cacc est connecté aux bornes de l'antenne L, la plage de fréquence sélectionnée est alors correcte. Lorsque les moyens de commutation Kc sont fermés, le condensateur équivalent vu par l'antenne L est la somme des capacités du condensateur de désaccord Cdes et du condensateur d'accord Cacc, la plage de fréquence sélectionnée est décalée, ce qui a pour effet d'atténuer le bruit émis à la fréquence porteuse reconnue par l'émetteur-récepteur.

Les moyens d'atténuation du bruit selon cette variante de l'invention sont constitués par l'association des moyens de commutation Kc et de ce condensateur de désaccord Cdes. L'activation de ces moyens d'atténuation, c'est-à-dire la commutation du condensateur de désaccord Cdes de manière à ce que sa capacité s'additionne à celle du condensateur d'accord Cacc, est défini par le procédé de gestion sus-décrit.

Les figures 7A à 7C représentent la synchronisation des transpondeurs avec l'émetteur-récepteur.

La figure 7A représente les fenêtres de synchronisation envoyées par l'émetteur-récepteur à l'attention de tous les transpondeurs pendant les périodes de réception générale du procédé de gestion et ce dans le cadre des premier et deuxième modes de réalisation selon l'invention.. Durant cette période, lorsque les transpondeurs ont leur oscillateur interne activé, pour éviter tous problèmes de synchronisation avec l'émetteur-récepteur, il est prévu qu'entre chacune des fenêtres de réponse, l'émetteur-récepteur envoie une fenêtre de synchronisation pendant laquelle les moyens de détection (premier mode) ou les moyens d'extraction de signaux d'horloge (deuxième mode) des transpondeurs sont activés pour se synchroniser.

La figure 7B représente les fenêtres de synchronisation envoyées par l'émetteur-récepteur à l'attention des transpondeurs sélectionnés pendant la période de réception sélective du procédé de gestion dans le cadre des premier et deuxième modes de réalisation. Durant ces périodes de réception sélective, lorsque les transpondeurs sélectionnés ont leur oscillateur interne activé, afin d'éviter tous problèmes de synchronisation, l'émetteur-récepteur envoie sensiblement périodiquement des fenêtres de synchronisation. Dans le cadre de cette application, pour obtenir une dispersion raisonnable, il est prévu de synchroniser les transpondeurs sélectionnés par exemple tous les 8 bits.

La figure 7C représente des fenêtres dite « d'écoute » pendant lesquelles l'émetteur-récepteur se synchronise sur un transpondeur. Ces fenêtres d'écoute sont générées en dehors des périodes d'émission et de réception.

Il est bien entendu que la description n'est donnée qu'à titre d'exemple et que d'autres modes de réalisation, en particulier des moyens d'atténuation du bruit, peuvent faire l'objet de la présente invention.

Il est notamment possible d'envisager l'utilisation d'un régulateur de tension à charge constante placé au niveau de l'alimentation du transpondeur. L'idée est de fixer la consommation de courant à une valeur prédéterminée, en particulier lors de la modulation du transpondeur en réponse à l'émetteur-récepteur. Cette solution présente le désavantage d'une augmentation de la consommation d'énergie.

Il est également possible d'envisager l'utilisation d'un filtre placé au niveau des moyens diviseurs de fréquence afin de réduire les pics de consommation. Cette solution présente néanmoins des inconvénients au niveau de l'intégration sur le transpondeur.

Il est à noter qu'il est possible de prévoir la combinaison de certains moyens d'atténuation du bruit. Dans le cas particulier comprenant plusieurs moyens d'atténuation du bruit, il est possible d'activer n'importe lequel de ces moyens pendant les différentes périodes d'activation définies par le procédé de gestion.

## Revendications

1. Procédé de gestion d'une pluralité de transpondeurs placés dans un champ électromagnétique émis par un émetteur-récepteur, chacun desdits transpondeurs comprenant au moins une antenne (1), des moyens de synchronisation (30) avec ledit émetteur-récepteur délivrant des signaux à une fréquence porteuse donnée, et des moyens d'atténuation du bruit desdits transpondeurs comprenant un oscillateur (34) délivrant des signaux d'horloge à une fréquence inférieure à ladite fréquence porteuse, le procédé comprenant les étapes suivantes :
a. activer ledit oscillateur au moins durant une partie des périodes de réception générale (E2) dudit émetteur-récepteur,
b. désactiver lesdits moyens de synchronisation au moins partiellement lors de l'activation de l'oscillateur.

2. Procédé de gestion selon la revendication 1, pour lequel les moyens de synchronisation (30) avec ledit émetteur-récepteur comprennent des moyens d'extraction des signaux d'horloge (31) délivrés par ledit émetteur-récepteur à ladite fréquence porteuse et des moyens diviseurs de fréquence (32) placés en sortie desdits moyens d'extraction de signaux d'horloge, **caractérisé en ce que** l'étape (b) consiste à :
b. désactiver lesdits moyens diviseurs de fréquence au moins partiellement lors de l'activation de l'oscillateur.

3. Procédé de gestion selon la revendication 1 ou 2, pour lequel lesdites périodes de réception générale sont constituées d'au moins deux fenêtres de réponse décalées temporellement, **caractérisé en ce que** lesdits moyens d'atténuation du bruit des transpondeurs sont au moins activés dans la ou les fenêtres de réponse durant laquelle ou lesquelles lesdits transpondeurs ne répondent pas.

4. Procédé de gestion selon l'une des revendications 1 à 3, **caractérisé en ce que** durant des périodes de réception sélective (E4) dudit émetteur-récepteur, au moins un transpondeur est sélectionné et lesdits moyens d'atténuation du bruit des transpondeurs non sélectionnés sont activés.

5. Procédé de gestion selon l'une des revendications 2 à 4, **caractérisé en ce que** la fréquence des signaux délivrés par l'oscillateur est au moins huit fois inférieure à ladite fréquence porteuse.

6. Procédé de gestion selon l'une des revendications 2 à 4, **caractérisé en ce que** la fréquence des signaux délivrés par l'oscillateur est une fréquence de travail desdits transpondeurs, lesdits moyens diviseurs de fréquence étant totalement désactivés lors de l'activation de cet oscillateur.

7. Procédé de gestion selon l'une des revendications précédentes, **caractérisé en ce que** l'oscillateur de chaque transpondeur est activé pendant toute la durée des périodes de réception générale et pendant la durée des périodes de réception sélective.

8. Procédé de gestion selon la revendication 7, **caractérisé en ce que** lesdits moyens de synchronisation avec ledit émetteur-récepteur sont activés sensiblement périodiquement durant les périodes de réception générale et/ou sélective dudit émetteur/récepteur.

9. Procédé de gestion selon l'une des revendications 2 à 8, **caractérisé en ce que** lesdits moyens d'atténuation du bruit comprennent en outre des moyens de commutation (38a, 38b) dans un mode silence pendant lequel les moyens diviseurs de fréquence sont désactivés.

10. Procédé de gestion selon la revendication 9, **caractérisé en ce que** lesdits moyens de commutation dans le mode silence sont également actionnés en dehors des périodes de réception dudit émetteur-récepteur.

11. Procédé de gestion selon les revendications 6 et 9, **caractérisé en ce que** l'oscillateur des transpondeurs est activé pendant les périodes de réception générale de l'émetteur-récepteur et **en ce que** les moyens de commutation dans un mode silence des transpondeurs sont actionnés pendant les périodes de réception sélective de l'émetteur-récepteur.

12. Procédé de gestion selon la revendication 1, pour lequel les moyens de synchronisation comprennent des moyens d'extraction de signaux d'horloge (31) délivrés par ledit émetteur-récepteur à ladite fréquence porteuse, **caractérisé en ce que** l'oscillateur (34) délivre des signaux d'horloge à une fréquence de travail desdits transpondeurs et **en ce que** l'étape (b) consiste à désactiver les moyens d'extraction de signaux d'horloge lors de l'activation de l'oscillateur.

13. Procédé de gestion selon la revendication 1, pour lequel les moyens de synchronisation comprennent des moyens de détection d'enveloppe (31), **caractérisé en ce que** l'oscillateur (34) délivre des signaux d'horloge à une fréquence de travail desdits transpondeurs et **en ce que** l'étape (b) consiste à désactiver les moyens de détection d'enveloppe lors de l'activation de l'oscillateur.

14. Transpondeur, susceptible d'être placé dans un champ électromagnétique émis par un émetteur-récepteur externe, comprenant au moins une antenne (1), des moyens de synchronisation (30) avec ledit émetteur-récepteur externe délivrant des signaux à une fréquence porteuse donnée, et des moyens d'atténuation du bruit qu'il est susceptible d'émettre, activés au moins durant une partie des périodes de réception générale (E2) dudit émetteur-récepteur **caractérisé en ce que** les moyens d'atténuation du bruit comprennent un oscillateur (34) délivrant des signaux d'horloge à une fréquence inférieure à ladite fréquence porteuse, et des moyens (36, 38a) pour désactiver au moins partiellement lesdits moyens de synchronisation.

15. Transpondeur selon la revendication 14, dans lequel les moyens de synchronisation (30) comprennent des moyens d'extraction de signaux d'horloge (31) délivrés par ledit émetteur-récepteur à ladite fréquence porteuse et des moyens diviseurs de fréquence (32) placés en sortie desdits moyens d'extraction de signaux d'horloge **caractérisé en ce que** les moyens pour désactiver au moins partiellement les moyens de synchronisations comprennent des moyens pour désactiver (38a) au moins partiellement lesdits moyens diviseurs de fréquence.

16. Transpondeur selon la revendication 15, **caractérisé en ce que** la fréquence des signaux délivrés par l'oscillateur est au moins huit fois inférieure à ladite fréquence porteuse.

17. Transpondeur selon la revendication 15, **caractérisé en ce que** la fréquence des signaux délivrés par l'oscillateur est une fréquence de travail du transpondeur.

18. Transpondeur selon la revendication 17, **caractérisé en ce que** lesdits moyens d'atténuation comprennent en outre des moyens de commutation (38a, 38b) dans un mode silence pendant lequel les moyens diviseurs de fréquence sont désactivés.

19. Transpondeur selon la revendication 14, dans lequel lesdits moyens de synchronisation comprennent des moyens d'extraction de signaux d'horloge (31) délivrés par ledit émetteur-récepteur à ladite fréquence porteuse **caractérisé en ce que** la fréquence des signaux délivrés par l'oscillateur est une fréquence de travail du transpondeur et **en ce que** les moyens pour désactiver au moins partiellement les moyens de synchronisations comprennent des moyens pour désactiver (36) les moyens d'extraction de signaux d'horloge.

20. Transpondeur selon la revendication 14, **caractérisé en ce que** les moyens de synchronisation comprennent des moyens de détection d'enveloppe (31) **en ce que** la fréquence des signaux délivrés par l'oscillateur est une fréquence de travail de l'oscillateur et **en ce que** les moyens pour désactiver au moins partiellement les moyens de synchronisations comprennent des moyens pour désactiver (36) les moyens de détection d'enveloppe.

## Patentansprüche

1. Verfahren zum Steuern mehrerer Transponder, die in einem elektromagnetischen Feld angeordnet sind, das von einem Sender/Empfänger ausgesendet wird, wobei jeder der Transponder wenigstens eine Antenne (1), Mittel (30) zur Synchronisation mit dem Sender/Empfänger, die Signale mit einer gegebenen Trägerfrequenz liefern, und Mittel zum Dämpfen des Rauschens der Transponder, die einen Oszillator (34) enthalten, der Taktsignale mit einer Frequenz unterhalb der Trägerfrequenz liefert, umfasst, wobei das Verfahren die folgenden Schritte umfasst:
a. Aktivieren des Oszillators wenigstens während eines Teils der Perioden des allgemeinen Empfangs (E2) des Senders/Empfängers,
b. zumindest teilweises Deaktivieren der Synchronisationsmittel bei der Aktivierung des Oszillators.

2. Steuerverfahren nach Anspruch 1, für das die Mittel (30) zur Synchronisation mit dem Sender/Empfänger Mittel (31) zum Extrahieren von Taktsignalen, die von dem Sender/Empfänger mit der Trägerfrequenz geliefert werden, und Frequenzteilermittel (32), die am Ausgang der Taktsignal-Extraktionsmittel angeordnet sind, umfassen, **dadurch gekennzeichnet, dass** der Schritt (b) darin besteht:
b. die Frequenzteilermittel bei der Aktivierung des Oszillators wenigstens teilweise zu deaktivieren.

3. Steuerverfahren nach Anspruch 1 oder 2, für das die Perioden des allgemeinen Empfangs aus wenigstens zwei zeitlich verschobenen Antwortfenstern bestehen, **dadurch gekennzeichnet, dass** die Mittel zur Dämpfung des Rauschens der Transponder wenigstens in dem oder den Antwortfenstern, während derer der oder die Transponder nicht antworten, aktiviert werden.

4. Steuerverfahren nach einem der Ansprüche 1 bis 3, **dadurch gekennzeichnet, dass** während Perioden des wahlweisen Empfangs (E4) des Senders/Empfängers wenigstens ein Transponder ausgewählt wird und die Mittel zur Dämpfung des Rauschens der Transponder, die nicht ausgewählt sind, aktiviert werden.

5. Steuerverfahren nach einem der Ansprüche 2 bis 4, **dadurch gekennzeichnet, dass** die Frequenz der vom Oszillator gelieferten Signale wenigstens achtmal kleiner als die Trägerfrequenz ist.

6. Steuerverfahren nach einem der Ansprüche 2 bis 4, **dadurch gekennzeichnet, dass** die Frequenz der Signale, die von dem Oszillator geliefert werden, eine Arbeitsfrequenz der Transponder ist, wobei die Frequenzteilermittel bei der Aktivierung dieses Oszillators vollständig deaktiviert werden.

7. Steuerverfahren nach einem der vorhergehenden Ansprüche, **dadurch gekennzeichnet, dass** der Oszillator jedes Transponders während der gesamten Dauer der Perioden des allgemeinen Empfangs und während der Dauer der Perioden des wahlweisen Empfangs aktiviert ist.

8. Steuerverfahren nach Anspruch 7, **dadurch gekennzeichnet, dass** die Mittel zur Synchronisation mit dem Sender/Empfänger während der Perioden des allgemeinem Empfangs und/oder des wahlweisen Empfangs des Senders/Empfängers im Wesentlichen periodisch aktiviert werden.

9. Steuerverfahren nach einem der Ansprüche 2 bis 8, **dadurch gekennzeichnet, dass** die Rauschdämpfungsmittel außerdem Mittel (38a, 38b) zum Umschalten in einen Ruhemodus, währenddessen die Frequenzteilermittel deaktiviert sind, umfassen.

10. Steuerverfahren nach Anspruch 9, **dadurch gekennzeichnet, dass** die Mittel zum Umschalten in den Ruhemodus auch außerhalb der Empfangsperioden des Senders/Empfängers betrieben werden.

11. Steuerverfahren nach den Ansprüchen 6 bis 9, **dadurch gekennzeichnet, dass** der Oszillator der Transponder während der Perioden des allgemeinem Empfangs des Senders/Empfängers aktiviert ist und dass die Mittel zum Umschalten in den Ruhemodus der Transponder während der Perioden des wahlweisen Empfangs des Senders/Empfängers betrieben werden.

12. Steuerverfahren nach Anspruch 1, für das die Synchronisationsmittel Mittel (31) zum Extrahieren von Taktsignalen, die von dem Sender/Empfänger mit der Trägerfrequenz geliefert werden, umfassen, **dadurch gekennzeichnet, dass** der Oszillator (34) Taktsignale mit einer Arbeitsfrequenz der Transponder liefert und dass der Schritt (b) darin besteht, die Taktsignal-Extraktionsmittel bei der Aktivierung des Oszillators zu deaktivieren.

13. Steuerverfahren nach Anspruch 1, für das die Synchronisationsmittel Mittel (31) zum Erfassen einer Einhüllenden umfassen, **dadurch gekennzeichnet, dass** der Oszillator (34) Taktsignale mit einer Arbeitsfrequenz der Transponder liefert und dass der Schritt (b) darin besteht, die Mittel zum Erfassen der Einhüllenden bei der Aktivierung des Oszillators zu deaktivieren.

14. Transponder, der in einem elektromagnetischen Feld angeordnet werden kann, das von einem externen Sender/Empfänger ausgesendet wird, mit wenigstens einer Antenne (1), Mitteln (30) zur Synchronisation mit dem äußeren Sender/Empfänger, die Signale mit einer gegebenen Trägerfrequenz liefern, und Mitteln zum Dämpfen des Rauschens, das er aussenden kann, die zumindest während eines Teils der Perioden des allgemeinen Empfangs (E2) des Senders/Empfängers aktiviert sind, **dadurch gekennzeichnet, dass** die Rauschdämpfungsmittel einen Oszillator (34), der Taktsignale mit einer Frequenz liefert, die niedriger als die Trägerfrequenz ist, und Mittel (36, 38a), um die Synchronisationsmittel wenigstens teilweise zu deaktivieren, umfassen.

15. Transponder nach Anspruch 14, in dem die Synchronisationsmittel (30) Mittel (31) zum Extrahieren von Taktsignalen, die von dem Sender/Empfänger mit der Trägerfrequenz geliefert werden, und Frequenzteilermittel (32), die am Ausgang der Taktsignal-Extraktionsmittel angeordnet sind, umfassen, **dadurch gekennzeichnet, dass** die Mittel zum zumindest teilweisen Deaktivieren der Synchronisationsmittel Mittel (38a), die die Frequenzteilermittel zumindest teilweise deaktivieren, umfassen.

16. Transponder nach Anspruch 15, **dadurch gekennzeichnet, dass** die Frequenz der vom Oszillator gelieferten Signale wenigstens achtmal kleiner als die Trägerfrequenz ist.

17. Transponder nach Anspruch 15, **dadurch gekennzeichnet, dass** die Frequenz der vom Oszillator gelieferten Signale eine Arbeitsfrequenz des Transponders ist.

18. Transponder nach Anspruch 17, **dadurch gekennzeichnet, dass** die Dämpfungsmittel außerdem Mittel (38a, 38b) zum Umschalten in einen Ruhemodus, währenddessen die Frequenzteilermittel deaktiviert sind, umfassen.

19. Transponder nach Anspruch 14, in dem die Synchronisationsmittel Mittel (31) zum Extrahieren von Taktsignalen, die von dem Sender/Empfänger mit der Trägerfrequenz geliefert werden, umfassen, **dadurch gekennzeichnet, dass** die Frequenz der von dem Oszillator gelieferten Signale eine Arbeitsfrequenz des Transponders ist und dass die Mittel zum zumindest teilweisen Deaktivieren der Synchronisationsmittel Mittel (36), um die Taktsignal-Extraktionsmittel zu deaktivieren, umfassen.

20. Transponder nach Anspruch 14, **dadurch gekennzeichnet, dass** die Synchronisationsmittel Mittel (31) zum Erfassen einer Einhüllenden umfassen, dass die Frequenz der vom Oszillator gelieferten Signale eine Arbeitsfrequenz des Oszillators ist und dass die Mittel, die die Synchronisationsmittel zumindest teilweise deaktivieren, Mittel (36), die die Mittel zur Erfassung der Einhüllenden deaktivieren, umfassen.

## Claims

1. Method for operating a plurality of transponders placed in an electromagnetic field transmitted by a transceiver, each of the transponders including at least an antenna (1), synchronisation means (30) with said transceiver supplying signals having a given carrier frequency and transponder noise reducing means including an oscillator (34) supplying clock signals having a frequency lower than the carrier frequency, the method including the steps of:
a. activating said oscillator at least during a part of the periods of general reception (E2) of said transceiver,
b. deactivating said synchronisation means at least partially upon activation of the oscillator.

2. Operating method according to claim 1, wherein the synchronisation means (30) with said transceiver include means for extracting clock signals (31) supplied by said transceiver at the carrier frequency and frequency divider means (32) placed at the output of said clock signal extraction means, **characterized in that** step (b) consists in:
b. deactivating said frequency divider means at least partially during activation of the oscillator.

3. Operating method according to claim 1 or 2 , wherein the general reception periods are formed of at least two time shifted response windows, **characterized in that** said transponder noise reducing means are at least activated in the response window or windows during which said transponders do not respond.

4. Operating method according to any of claims 1 to 3, **characterised in that** during selective reception periods (E4) of said transceiver, at least one transponder is selected and said noise reducing means of the non selected transponders are activated.

5. Operating method according to any of claims 2 to 4, **characterised in that** the frequency of the signals supplied by the oscillator is at least eight times less than the carrier frequency.

6. Operating method according to any of claims 2 to 4, **characterised in that** the frequency of the signals supplied by the oscillator is a working frequency of said transponders, said frequency divider means being totally deactivated during the activation of this oscillator.

7. Operating method according to any of the preceding claims, **characterised in that** the oscillator of each transponder is activated during the all duration of the general reception periods and during the duration of the selective reception periods.

8. Operating method according to claim 7, **characterised in that** said synchronisation means with said transceiver are activated substantially periodically during the general and/or selective reception periods of said transceiver.

9. Operating method according to any of claims 2 to 8, **characterised in that** said noise reducing means further include silence mode switching means (38a, 38b) during which the frequency divider means are deactivated.

10. Operating method according to claim 9, **characterised in that** said silence mode switching means are also activated outside reception periods of said transceiver.

11. Operating method according to claims 6 and 9, **characterised in that** the oscillator of the transponders is activated during the transceiver general reception periods and **in that** the silence mode switching means are activated during the transceiver selective reception periods.

12. Operating method according to claim 1, wherein the synchronisation means include means for extracting clock signals (31) supplied by said transceiver at said carrier frequency **characterised in that** the oscillator (34) supplies clock signals at a transponder working frequency and **in that** step (b) consists in deactivating the clock signals extraction means during activation of the oscillator.

13. Operating method according to claim 1, wherein the synchronisation means include envelope detection means (31), **characterized in that** the oscillator (34) supplies clock signals at a transponder working frequency and **in that** step (b) consists in deactivating the envelope detection means during activation of the oscillator.

14. Transponder, able to be placed in the electromagnetic field transmitted by an external transceiver, including at least an antenna (1), synchronisation means (30) with the transceiver supplying signals having a given carrier frequency and noise reducing means that the transponder could transmit, activated during at least during a part of the periods of general reception (E2) of said transceiver, **characterized in that** the noise reducing means include an oscillator (34) supplying clock signals having a frequency lower that said carrier frequency and means (36, 38a) for deactivating at least partially said synchronisation means.

15. Transponder according to claim 14, wherein the synchronisation means (30) include means for extracting clock signals (31) supplied by said transceiver at said carrier frequency and frequency divider means (32) placed at the output of said clock signal extraction means, **characterized in that** the means for deactivating at least partially said synchronisation means include means for deactivating (38a) at least partially said frequency divider means.

16. Transponder according to claim 15, **characterised in that** the frequency of the signals supplied by the oscillator is at least eight times less than the carrier frequency.

17. Transponder according to claim 15, **characterised in that** the frequency of the signals supplied by the oscillator is a working frequency of said transponder.

18. Transponder according to claim 17, **characterised in that** the noise reducing means further include silence mode switching means (38a, 38b) during which the frequency divider means are deactivated.

19. Transponder according to claim 14, wherein the synchronisation means include means for extracting clock signals (31) supplied by said transceiver at said carrier frequency **characterised in that** the frequency of the signals supplied by the oscillator is a transponder working frequency and **in that** the means for deactivating at least partially the synchronisation means include means for deactivating (36) the clock signal extraction means.

20. Transponder according to claim 14, **characterised in that** the synchronisation means include envelope detection means (31), **in that** the frequency of the signals supplied by the oscillator is a transponder working frequency and **in that** the means for deactivating at least partially the synchronisation means include means for deactivating (36) the envelope detection means.
